# FASCICULE DE BREVET EUROPEEN

(11) **EP 2 596 247 B1**
(45) Date de publication et mention de la délivrance du brevet: **02.09.2015**
(21) Numéro de dépôt: 11741673.5
(22) Date de dépôt: 13.07.2011
(51) Int. Cl.: F04D 19/02, F04D 29/32, F04D 29/66, B64C 11/00, B64C 11/48, F02K 3/072

(54) **TURBOMOTEUR A DEUX HELICES CONTRAROTATIVES NON CARENEES**
TURBOFAN-TRIEBWERK MIT ZWEI GEGENLÄUFIGEN, MANTELLOSEN PROPELLERN (CROR)
TURBOENGINE WITH TWO COUNTERROTATING OPEN ROTORS (CROR)

(30) Priorité: 23.07.2010 FR 1056059
(43) Date de publication de la demande: 29.05.2013
(73) Titulaire: Snecma, 75015 Paris (FR)
(72) Inventeur: VUILLEMIN, Alexandre, Alfred, Gaston, 13010 Marseille (FR)
(74) Mandataire: Gevers France
(86) Numéro de dépôt international: PCT/FR2011/051690
(87) Numéro de publication internationale: WO 2012/010782

(56) Documents cités:
- EP-A1- 2 516 262
- EP-A2- 2 368 795
- FR-A1- 2 938 502
- US-A- 3 814 351
- US-A- 5 620 303

## Description

La présente invention concerne le domaine des turbomoteurs d'aéronef à hélices doubles non carénées.

Un moteur de ce type, désigné dans le présent domaine par les termes « open rotor » ou « unducted fan » comprend un moteur à turbine à gaz alimentant une ou plusieurs turbines libres avec des rotors coaxiaux contrarotatifs associés chacun à une hélice. Les deux hélices s'étendent sensiblement radialement à l'extérieur de la nacelle du turbomoteur et sont elles mêmes coaxiales et contrarotatives. Les deux hélices sont entraînées soit directement, les deux hélices sont montées à la périphérie des deux rotors de turbine, soit par l'intermédiaire d'une boîte mécanique à engrenages, les deux hélices étant reliées chacune à une sortie de la boîte à engrenages.

Les turbomoteurs à hélices non carénées sont à l'étude actuellement car ils ont l'avantage d'être performants en étant capables de fournir une poussée importante et de consommer moins de carburant que d'autres turboréacteurs à soufflante carénée équivalents.

Cependant les forts niveaux acoustiques engendrés par les mécanismes d'interaction aérodynamique entre les deux hélices sont pénalisants pour ce type de propulsion.

L'une des sources de ce bruit provient de l'interaction de tourbillons, générés au niveau des têtes des pales de l'hélice amont, avec les pales de l'hélice aval. Le vortex généré par l'hélice amont interagit avec l'hélice aval de façon très énergique ce qui génère de forts niveaux de bruit.

Des voies de réduction du bruit d'hélices visent le contrôle des écoulements autour des profils, ces moyens ne sont pas mâtures en l'état de la technique actuelle.

Une solution pour supprimer ce bruit consiste à disposer deux hélices de diamètres différents, le diamètre externe de l'hélice aval étant plus petit que celui de l'hélice amont de façon à ce que les tourbillons générés par l'hélice amont passent à l'extérieur de l'enveloppe de l'hélice aval et n'interagissent pas avec celle-ci. Une telle solution n'est pas satisfaisante car elle se traduit pas une réduction de la poussée produite par l'hélice aval et donc par une diminution des performances du moteur. Il serait possible d'augmenter la charge de l'hélice aval pour compenser la réduction de son diamètre mais on augmenterait aussi la difficulté aéromécanique du dessin du doublet d'hélice et elle deviendrait très complexe et difficile à réaliser.

Une autre solution est développée dans la demande de brevet FR 2 938 502 au nom de Snecma. Elle propose une turbomachine dont au moins certaines des pales de l'hélice amont comprennent sur leurs parties d'extrémité radialement externes des moyens de guidage d'air orientés d'amont en aval vers l'extérieur et destinés à dévier les tourbillons formés au niveau des têtes de pales de l'hélice amont radialement à l'extérieur des pales de l'hélice aval. Ces moyens de guidage portés par les pales de l'hélice amont guident vers l'extérieur au moins une partie des tourbillons formés en bout des pales de l'hélice amont, qui n'interagissent donc pas ou peu avec les pales de l'hélice aval. Cela permet de réduire de manière significative - jusqu'à 3dB de réduction - les nuisances sonores liées à l'interaction de ces tourbillons avec l'hélice aval. Ils permettent également une réduction de l'intensité des tourbillons générés et donc d'aider à la réduction du bruit. Cette solution ne nécessite donc pas de modifier les dimensions des hélices amont et aval qui peuvent avoir sensiblement le même diamètre externe.

Cependant ces moyens agissent sur l'écoulement d'air à travers le rotor pendant toutes les phases du vol même quand l'atténuation du bruit n'est pas nécessaire.

L'objectif de l'invention est donc de réduire les niveaux de bruit générés par les hélices de manière, en particulier, à respecter les normes de certification acoustique relativement sévères qui s'appliquent aux phases de décollage et d'atterrissage de l'aéronef équipé de ce moteur.

Un autre objectif est de fournir de bonnes performances aérodynamiques en croisière.

On parvient à ces objectifs conformément à l'invention, avec un turbomoteur comprenant deux hélices externes non carénées coaxiales et contrarotatives, respectivement amont et aval, caractérisé par le fait que les pales de l'hélice aval sont rétractables dans leur sens longitudinal, de manière à réduire le diamètre de celle-ci.

On parvient à ce résultat avec un turbomoteur dont les pales sont télescopiques avec au moins deux éléments de pales qui s'emboîtent l'un dans l'autre et peuvent coulisser l'un par rapport à l'autre le long de l'axe longitudinal de la pale.

Par l'invention, on permet de réduire le diamètre de l'hélice aval de manière suffisante pour qu'elle ne voie pas les tourbillons dans les phases où l'on souhaite atténuer le bruit du moteur, c'est-à-dire pendant le décollage et l'atterrissage de l'aéronef. On rétracte les pales de l'hélice aval de préférence suffisamment pour supprimer une part importante des interactions au cours de ces phases à l'entour des aéroports.

Selon un mode de réalisation, lesdits deux éléments montés coulissants l'un par rapport à l'autre sont ménagés en extrémité libre des pales.

Selon un autre mode de réalisation lesdits deux éléments sont ménagés du côté du pied des pales.

On réduit ainsi le bruit émis par le turbomoteur pendant une phase de fonctionnement de celui-ci, en réduisant la longueur des pales de l'hélice aval pendant ladite phase de fonctionnement. Lesdites phases de fonctionnement correspondant au décollage et à l'atterrissage de l'aéronef.

On compense avantageusement la réduction de la longueur des pales par une augmentation de la charge sur celle-ci, notamment en variant l'angle de calage des pales.

On décrit maintenant l'invention plus en détail sans que cela soit limitatif à l'aide des dessins annexés sur lesquels
La figure 1 représente en coupe axiale le schéma d'un turbomoteur à double hélice non carénées ;
La figure 2 est une vue en perspective d'une hélice non carénée de l'art antérieur illustrant la forme des lignes de courant autour des pales de l'hélice ;
Les figures 3 et 4 représentent un mode de réalisation de l'invention selon lequel une pale de l'hélice aval comprend une extrémité télescopique vue dans les deux positions, l'une étendue et l'autre rétractée.

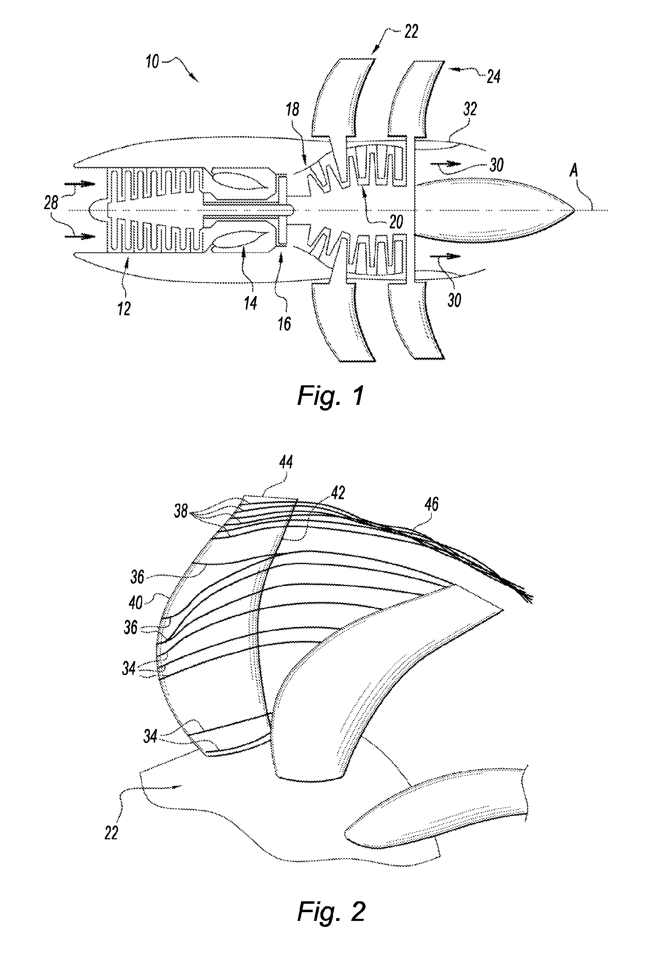

En référence à la figure 1, on peut apercevoir une turbomachine 10 du type à « open rotor », cette expression désigne un doublet d'hélices non carénées qui comporte d'amont en aval, dans le sens d'écoulement des gaz à l'intérieur de la turbomachine, un compresseur 12, une chambre annulaire de combustion 14, une turbine amont 16 à haute pression, et deux turbines aval 18, 20 à pression plus faible qui sont contrarotatives, c'est-à-dire qu'elles tournent dans deux sens opposés autour de l'axe longitudinal A de la turbomachine.

Chacune de ces turbines aval 18, 20 est solidaire en rotation d'une hélice externe 22, 24 s'étendant radialement à l'extérieur de la nacelle 26 de la turbomachine. La nacelle est une enveloppe sensiblement cylindrique qui s'étend le long de l'axe A autour du compresseur 12, de la chambre de combustion 14, et des turbines 16, 18 et 20.

Le flux d'air 28 qui pénètre dans le compresseur 12 est comprimé puis est mélangé à du carburant et brûlé dans la chambre de combustion 14. Les gaz de combustion sont ensuite injectés dans les turbines pour entraîner en rotation les hélices 22, 24 qui fournissent la majeure partie de la poussée générée par la turbomachine. Les gaz de combustion sortent des turbines et sont expulsés à travers une tuyère 30 (flèches 32) pour augmenter la poussée.

Les hélices 22, 24 sont coaxiales et disposées l'une derrière l'autre. De façon connue, chacune de ces hélices 22, 24 comporte une pluralité de pales, 22a et 24a respectivement, qui sont régulièrement réparties autour de l'axe A de la turbomachine. Chaque pale s'étend sensiblement radialement dans un plan perpendiculaire à l'axe de rotation, et comporte un bord amont formant le bord d'attaque de la pale, un bord aval formant le bord de fuite, une extrémité radialement interne formant le pied de la pale, et une extrémité radialement externe formant la tête de la pale.

Selon l'art antérieur, l'hélice aval 24 a sensiblement le même diamètre que l'hélice amont 22 de façon à ce que ces hélices fournissent la même poussée en fonctionnement et que la totalité du flux d'air comprimé par l'hélice amont soit comprimé à nouveau par l'hélice aval.

La figure 2 est une vue schématique partielle en perspective de l'hélice amont 22 d'une turbomachine de la technique antérieure, et représente l'évolution des lignes de courant sur une pale de cette hélice. Les lignes de courant 34, 36, 38 passent entre les pales de l'hélice et suivent plus ou moins le profil de ces pales, depuis les bords d'attaque 40 jusqu'aux bords de fuite 42 de ces pales.

Les lignes de courant 34 qui passent sur les parties d'extrémité radialement internes des pales sont sensiblement parallèles entre elles. Au contraire, les lignes de courant 36, 38 qui passent sur les parties d'extrémité radialement externes ont tendance à converger les unes vers les autres, ce phénomène étant de plus en plus intense à mesure que l'on se rapproche des têtes 44 des pales. Les lignes de courant 36 au niveau 20 des têtes des pales s'enroulent les unes autour des autres et forment des tourbillons 46 qui viennent impacter sur les pales de l'hélice aval 24, ces impacts étant à l'origine de nuisances sonores très importantes.

Conformément à l'invention, il est prévu de permettre la rétraction longitudinale des pales de l'hélice aval dans le but de réduire le bruit émis par l'interaction de l'hélice amont sur l'hélice aval.

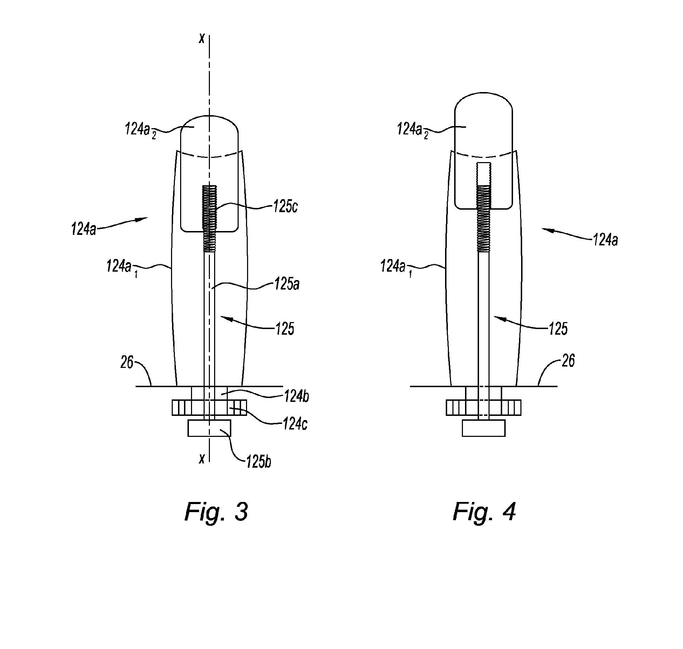

On a représenté sur les figures 3 et 4, un exemple de réalisation de l'invention. Les pales 24a à géométrie invariable de l'hélice aval sont remplacées par des pales 124a de longueur variable. Selon le mode de réalisation de la figure 3, la pale 124a est télescopique avec deux éléments 124a1 et 124a2 qui coulissent l'un dans l'autre le long de l'axe longitudinal XX de la pale 124. Ici, l'élément 124a1 constitue le corps principal de la pale et s'étend radialement à l'extérieur de la nacelle 26 depuis le pied de pale.

Le pied de pale comprend un pivot 124b monté rotatif dans un palier d'axe radial de façon à permettre la rotation de la pale autour de son axe longitudinal XX et de faire varier l'angle de calage de la pale selon le besoin. Les paliers des pales de l'hélice sont montés dans une cage annulaire 124c. La cage annulaire 124c est entraînée par la roue de turbine mue en rotation par les gaz de combustion. Un exemple de montage est décrit dans la demande de brevet FR 0 954 561 ou FR 0 955 516 au nom de Snecma.

L'extrémité distante de l'élément 124a1 est creuse et forme un logement pour l'élément de tête 124a2 de la pale dans lequel celui-ci peut coulisser entre une position déployée, montrée sur la figure 3, où la longueur totale de la pale est à son maximum et une position rétractée montrée sur la figure 4.

Un mécanisme d'entraînement approprié assure le déplacement de l'élément d'extrémité 124a2 entre les deux positions, déployée et rétractée. Un exemple de mécanisme d'entraînement 125 est formé d'un vérin à vis. Celui-ci comprend une tige filetée 125a tournant sur elle-même autour de l'axe longitudinal de l'élément de pale 124a1 et coopérant avec un logement à pas de vis solidaire de l'élément d'extrémité 124a2. La tige filetée est entraînée par un moteur 125b logé à l'intérieur de la nacelle 26. dans la mesure où l'élément de tête 124a2 coulisse à l'intérieur de l'élément 124a1 sans rotation autour de l'axe longitudinal de la pale, la rotation de la tige filetée entraîne le déplacement longitudinal de cet élément.

Les deux configurations possibles de l'hélice aval permettent ainsi soit de fonctionner avec un rendement optimum soit d'atténuer le bruit. Dans cette dernière position, avec les pales rétractées longitudinalement, le diamètre de l'hélice est réduit. Les lignes de courant longent la tête de pale et donnent naissance à des tourbillons de bout de pale sur l'hélice amont mais on évite l'impact de ces tourbillons sur l'hélice aval et la source de bruit. Par ailleurs, on compense la réduction de la longueur des pales par une augmentation de la charge sur celle-ci, notamment en variant l'angle de calage des pales.

En configuration de croisière, pendant laquelle il n'est pas nécessaire d'atténuer le bruit des hélices et qui correspond à plus de 90% de la mission, les deux hélices sont déployées ; en particulier les pales de l'hélice aval s'étendent en direction radiale par rapport à l'axe du moteur sensiblement à la même longueur que les pales de l'hélice amont. C'est au décollage ou à l'atterrissage que la position rétractée des pales de l'hélice aval est activée et cela ne représente que 10% de la mission en général.

Des mécanismes, autres que les vérins à vis, permettent la rétraction longitudinale des pales de l'hélice aval. L'invention ne se limite pas à ce mode d'actionnement.

## Revendications

1. Turbomoteur comprenant deux hélices externes non carénées, coaxiales et contrarotatives, respectivement amont et aval, la longueur des pales d'au moins l'une des deux hélices pouvant être variée de telle manière que le diamètre de l'hélice aval soit inférieur au diamètre de l'hélice amont, **caractérisé par le fait que** les pales (124a) à longueur variable sont télescopiques avec au moins deux éléments de pale (124a1, 124a2) qui s'emboîtent l'un dans l'autre et peuvent coulisser l'un par rapport à l'autre le long de l'axe de la pale, les deux éléments de pale s'étendant radialement à l'extérieur d'une nacelle du turbomoteur.

2. Turbomoteur selon la revendication 1 dont les pales (124a) de l'hélice aval (124) sont rétractables le long de leur axe longitudinal, de manière à réduire le diamètre de l'hélice aval.

3. Turbomoteur selon la revendication 1 ou 2 dont lesdits deux éléments montés coulissants l'un par rapport à l'autre sont ménagés en tête des pales.

4. Turbomoteur selon l'une des revendications 1 à 3 dont au moins les pales de l'hélice aval sont à calage variable.

5. Procédé pour réduire le bruit émis par un turbomoteur selon l'une des revendications précédentes, pendant une phase de fonctionnement de celui-ci, consistant à modifier la longueur des pales d'au moins une hélice de manière à ce que le diamètre de l'hélice aval soit inférieur à celui de l'hélice amont pendant ladite phase de fonctionnement.

6. Procédé selon la revendication précédente, le turbomoteur étant monté sur un aéronef, lesdites phases de fonctionnement correspondant au décollage et à l'atterrissage de l'aéronef.

7. Procédé selon l'une des revendications 5 ou 6 selon lequel on compense la réduction de la longueur des pales par une augmentation de la charge sur celle-ci, notamment en variant l'angle de calage des pales.

## Patentansprüche

1. Turbomotor mit zwei äußeren, unverkleideten, koaxialen und entgegengesetzt rotierende Rotoren, wobei der eine stromaufwärts und der andere stromabwärts gelegen ist, wobei die Länge der Schaufeln von zumindest einem der zwei Rotoren derart veränderbar ist, dass der Durchmesser des stromabwärts gelegenen Rotors kleiner als der Durchmesser des stromaufwärts gelegenen Rotors ist, **dadurch gekennzeichnet, dass** die Schaufeln (124a) mit veränderbarer Länge teleskopisch sind mit zumindest zwei Schaufelelementen (124a1, 124a2), die ineinander eingepasst sind und relativ zueinander entlang der Achse der Schaufel gleiten können, wobei sich die zwei Schaufelelemente radial nach außen von einer Gondel (26) des Turbomotors erstrecken.

2. Turbomotor nach Anspruch 1, wobei die Schaufeln (124a) des stromaufwärts gelegenen Rotors (124) entlang ihrer Längsachse derart einziehbar sind, dass sich der Durchmesser des stromaufwärts gelegenen Rotors verringert.

3. Turbomotor nach Anspruch 1 oder 2, wobei die zwei Elemente, die relativ zueinander gleitend angebracht sind, sich an der Spitze der Schaufeln befinden.

4. Turbomotor nach einem der Ansprüche 1 bis 3, wobei zumindest die Schaufeln des stromabwärts gelegenen Rotors variabel einstellbar sind.

5. Verfahren zum Verringern des Lärms, welcher von einem Turbomotor nach einem der vorhergehenden Ansprüche, während einer Betriebsphase von diesem ausgesendet wird, was darin besteht, dass die Länge der Schaufeln von zumindest einem Rotor derart verändert wird, dass der Durchmesser des stromaufwärts gelegenen Rotors kleiner als derjenige des stromabwärts gelegenen Rotors während der Betriebsphase ist.

6. Verfahren nach dem vorhergehenden Anspruch, wobei der Turbomotor an einem Luftfahrzeug angebracht ist, wobei die Betriebsphase dem Abheben oder Landen des Luftfahrzeugs entspricht.

7. Verfahren nach einem der Ansprüche 5 oder 6, wobei die Verringerung der Länge der Schaufeln durch eine Vergrößerung der Last auf diese kompensiert wird, insbesondere durch Verändern des Einstellwinkels der Schaufeln.

## Claims

1. A turbine engine comprising two coaxial and contra-rotating unducted external fans, these respectively being an upstream and a downstream fan, the length of the blades of at least one of the two fans being able to be varied in such a way that the diameter of the downstream fan is less than the diameter of the upstream fan, **characterized in that** the variable-length blades (124a) are telescopic with at least two blade elements (124a1, 124a2) which nest one inside the other and can slide one relative to the other along the axis of the blade, the two blades extending radially on the outside of the nacelle (26) of the turbine engine.

2. The turbine engine as claimed in claim 1, in which blades (124a) of the downstream fan (124) are retractable along their longitudinal axis, so as to reduce the diameter of the downstream fan.

3. The turbine engine as claimed in claim 1 or 2, in which said two elements mounted so as to slide one relative to the other are formed at the tip of the blades.

4. The turbine engine as claimed in one of claims 1 to 3, in which at least the blades of the downstream fan are variable-pitch blades.

5. A method for reducing the noise emitted by a turbine engine as claimed in one of preceding claims, during a phase of operation of this engine, involving modifying the length of the blades of at least one fan so that the diameter of the downstream fan is less than that of the upstream fan during said phase of operation.

6. The method as claimed in the preceding claim, the turbine engine being mounted on an aircraft, said phases of operation corresponding to the take-off and landing of the aircraft.

7. The method as claimed in one of claims 5 or 6, whereby the reduction in blade length is compensated for by increasing the loading on the blade, notably by varying the blade pitch angle.
